# EUROPEAN PATENT APPLICATION

(11) **EP 3 530 969 A1**
(43) Date of publication of application: **28.08.2019**
(21) Application number: 18158319.6
(22) Date of filing: 23.02.2018
(51) Int. Cl.: F16C 29/00, F16C 29/12

(54) **SLIDER ASSEMBLY AND TRANSPORTATION SYSTEM**

(71) Applicant: Beckman Coulter Inc., Brea, California 92821 (US)
(72) Inventor: KRAFCZYK, Thomas, 82140 Olching (DE); MÜLLER, Martin, 83727 Schliersee-Neuhaus (DE)
(74) Representative: Vos, Derk

(57) **Abstract**

A slider assembly (10) for a transportation system (100) for transporting an object (101) is provided. The slider assembly (10) comprises a first support (12a) and a second support (12b), a first guiding element (14a) arranged on the first support (12a) and a second guiding element (14b) arranged on the second support (12b), wherein the first guiding element (14a) is configured to receive a first rail (104a) and the second guiding element (14b) is configured to receive a second rail (104b), such that the slider assembly (10) is slidably arrangeable on the first rail (104a) and the second rail (104b). The slider assembly further comprises a tolerance compensation element (18), which connects the first support (12a) and the second support (12b), such that at least a part of the first support (12a) and at least a part of the second support (12b) are spaced apart from each other, thereby allowing a relative movement of the first support (12a) and the second support (12b) with respect to each other.

## Description

### Field of the invention

The invention generally relates to the field of industrial transportation systems, such as e.g. laboratory automation systems for transporting a sample container or an instrument. Particularly, the invention relates to a slider assembly for a transportation system for transporting an object, and to an automatic transportation system comprising such slider assembly.

### Background of the invention

In many industrial fields, transportation systems are utilized to position objects within a working environment. An exemplary working environment is a laboratory environment, in which e.g. a sample container and/or an instrument can be moved and positioned within the laboratory environment by means of the transportation system. Another exemplary working environment is a manufacturing environment, in which e.g. parts of a product can be positioned within the manufacturing environment, for example in order to assemble the product.

By way of example, typical transportation systems can comprise one or more sliders that can be moved along one or more axes of the transportation system, such as e.g. an X-axis and/or a Y-axis, in order to precisely and flexibly position an object. Therein, a movement of the slider and/or the object can at least partly be automated and/or at least partly manually operated.

The transportation systems utilized in working environments can be subject to high work loads, particularly in terms of a number of objects to be moved per unit time and/or in terms of a number of objects to be moved over a lifetime of the transportation system. This, in turn, can put certain demands on a mechanical stability and/or robustness of the transportation systems or parts thereof, such as e.g. the sliders. Further, at least some parts of the transportation systems should be manufactured with high precision in order to reduce downtimes of the transportation system and/or in order to increase the lifetime. This, however, can also result in increased production costs for the transportation systems and/or parts thereof.

### Summary of the invention

It may therefore be desirable to provide an improved, reliable and/or robust transportation system for transporting an object.

This is achieved by the subject-matter of the independent claims, wherein further embodiments are incorporated in the dependent claims and the following description.

According to first aspect of the invention, a slider assembly for a transportation system for transporting an object is provided. The slider assembly comprises a first support and a second support. The slider assembly further comprises a first guiding element arranged on the first support and a second guiding element arranged on the second support, wherein the first guiding element is configured to receive a first rail and the second guiding element is configured to receive a second rail, such that the slider assembly is slidably arrangeable and/or can be slidably arranged on the first rail and the second rail. The slider assembly further comprises a tolerance compensation element, wherein the tolerance compensation element connects the first support and the second support and/or the tolerance compensation element connects the first guiding element and the second guiding element, such that at least a part of the first support and at least a part of the second support are spaced apart from each other, thereby allowing a relative movement of the first support and the second support with respect to each other. Accordingly, the first support may be connected to the second support by the tolerance compensation element and/or the first guiding element may be connected to the second guiding element by the tolerance compensation element. Therein, at least a partial region of the first support can be spaced apart from at least a partial region of the second support, such that at least said partial region of the first support is movable with respect to said at least partial region of the second support. Further, the slider assembly may comprise a plurality of tolerance compensation elements. For instance, a first tolerance compensation element may connect the first support and the second support, and a second tolerance compensation element may connect the first guiding element and the second guiding element.

By connecting the first support and the second support with the tolerance compensation element, thereby spacing at least a partial region of the first support and the second support, respectively, apart from each other, it can be ensured that at least said partial regions of the first support and the second support can be moved with respect to each other. Based on this movement of the first support and the second support the slider assembly can advantageously compensate for any manufacturing tolerances, mounting tolerances and/or assembly tolerances of the slider assembly and/or of the first and second rails. Also, thermal expansion of any part of the slider assembly and/or of the rails can effectively be compensated for.

By way of example, the first rail and the second rail can be at least partly curved, e.g. due to manufacturing tolerances and/or due to thermal expansion. Such curvature of the first and second rails can effectively be compensated for by the inventive design and configuration of the slider assembly that allows for a movement of the first support and the second support with respect to each other. Hence, also manufacturing costs can be reduced, the slider assembly and/or the transportation system may be less susceptible or sensitive to tolerances.

Moreover, during movement of the slider assembly in a moving direction along the first and second rails, a force exerted on the slider assembly in a direction transverse to the moving direction can significantly be reduced. This can advantageously reduce a mechanical stress and/or strain in the slider assembly, thereby increasing a lifetime of the slider assembly.

Apart from that, the reduced force in the direction transverse to the moving direction can also reduce friction between the slider assembly and the rails while the slider assembly slides and/or glides along the rails. This can further reduce abrasion, degeneration and/or fatigue of the slider assembly. Also, a driving force for moving the slider assembly along the first and second rails can advantageously be reduced.

Generally, the transportation system can refer to a manual transportation system, in which the slider assembly can be manually moved along the first and second rails. The transportation system can, however, also refer to an automatic and/or semiautomatic transportation system. Further, the transportation system can be configured for moving and/or positioning any object in any working environment. For instance, the transportation system can refer to a laboratory automation system, e.g. for transporting and/or positioning a sample of a body fluid, a sample container and/or an instrument.

The first support and the second support, respectively, can refer to support structures, support elements, components, parts, constructional parts and/or members of the slider assembly. Further, the first guiding element and the second guiding element, respectively, can refer to parts and/or sections of the first support and the second support. Accordingly, the first guiding element can be integrally formed with the first support or the first guiding element can be attached to and/or mechanically fixed to the first support, e.g. on an outer surface thereof. Likewise, the second guiding element can be integrally formed with the second support or the second guiding element can be attached to and/or mechanically fixed to the second support, e.g. on an outer surface thereof.

The tolerance compensation element may mechanically connect and/or interconnect the first support and the second support. Therein, at least a part of tolerance compensation element can be fixed to at least a part of the first support and/or the second support. The first support, the second support and the tolerance compensation element can be formed as a single part or as separate parts. Specifically, the tolerance compensation element can be integrally formed with one of the first support and the second support or it can be integrally formed with both the first support and the second support. Generally, the tolerance compensation element can be configured to transfer at least a part of a driving force for moving the slider assembly in the moving direction along the first and second rails from the first support to the second support, or vice versa. By way of example, the driving force for moving the slider assembly may be exerted only on the first support. At least a part of this force can be transferred via the tolerance compensation element to the second support, which can be pulled by the first support and/or the tolerance compensation element in the moving direction of the slider assembly during movement of the slider assembly. Accordingly, the tolerance compensation element can be configured to have a certain stiffness and/or rigidity to transfer a force from one support to the other, while providing enough flexibility to allow for a movement of the first and second supports with respect to each other. Further, at least a part of or the entire tolerance compensation element can be arranged between the first support and the second support. Alternatively or additionally, the tolerance compensation element or at least a part thereof can be arranged on an outer surface of the support and an outer surface of the second support.

According to an embodiment of the invention, the first support and the second support are formed as separate parts. Alternatively or additionally the first support, the second support, and the tolerance compensation element are formed as separate parts. Forming at least some of the first support, the second support and the tolerance compensation element as separate parts may further increase a movability of the first support and the second support with respect to each other. Further, maintenance or servicing of the slider assembly may be simplified, e.g. because the separate parts can be individually replaced.

According to an embodiment of the invention, said at least part of the first support and said at least part of the second support are spaced apart from each other by at least 0.1 mm, preferably by at least 0.3 mm, thereby allowing a relative movement of the first support and the second support in a direction towards each other and/or in a direction away from each other. Accordingly, at least the parts or partial regions of the first support and the second support that are spaced apart from each other can be moved by at least 0.1 mm, preferably by at least 0.3 mm towards each other and/or away from each other. It is noted, however, that also the entire first support and the entire second support can be spaced apart from each other by at least 0.1 mm, preferably by at least 0.3 mm. Alternatively or additionally, the tolerance compensation element is configured to allow a relative movement of the first support and the second support in a direction towards each other and/or in a direction away from each other by at least 0.1 mm, preferably by at least 0.3 mm. The spacing and/or the movability of the first and second supports by at least 0.1 mm can ensure that, during movement of the slider assembly, a force in direction transverse to the moving direction can be effectively reduced and/or minimized. It is emphasized, however, that the spacing and/or the movability of the first and second supports can be much higher than 0.1 mm, such as at least e.g. 0.3 mm, 0.5 mm, 1 mm or even higher.

According to an embodiment of the invention, the first guiding element comprises a first recess configured to at least partly encompass the first rail. Alternatively or additionally, the second guiding element comprises a second recess configured to at least partly encompass the second rail. By providing the first recess and the second recess, the first guiding element and the second guiding element can be mechanically fixed to the first rail and the second rail, while being able to slide and/or glide along the first and second rails in the moving direction. For instance, the first guiding element and/or the second guiding element can be substantially U-shaped. Moreover, the first guiding element and the second guiding element each can comprise at least one bearing for reducing friction during the movement along the rails and/or for reducing the driving force required to move the slider assembly along the rails.

According to an embodiment of the invention, the first guiding element is integrally formed with the first support and/or the second guiding element is integrally formed with the second support. Such integral forming or design can increase a robustness and/or lifetime of the slider assembly.

According to an embodiment of the invention, the slider assembly further comprises at least one further support and at least one further tolerance compensation element connecting the at least one further support to at least one of the first support and the second support. Generally, the slider assembly can comprise an arbitrary number of supports and/or tolerance compensation elements. This allows the slider assembly to be moved along more than two rails. Also, a load carried by the slider assembly may be increased.

According to an embodiment of the invention, the tolerance compensation element comprises at least one material selected from the group consisting of metal, fiber-reinforced composite material, fiber-reinforced plastic material, elastic material, elastomer, and polymer-based material. Such materials may provide enough rigidity and flexibility to the tolerance compensation element.

According to an embodiment of the invention, the tolerance compensation element is at least partly formed from a metal sheet and/or the tolerance compensation element comprises at least one metal sheet. The metal sheet may comprise e.g. steel, spring steel, aluminum or any other suitable metal. Further, a thickness of the metal sheet may range from about 0.1 mm to about 10 mm, preferably from about 0.3 mm to about 5 mm, and even more preferably from about 0.5 mm to about 3 mm.

According to an embodiment of the invention, the tolerance compensation element comprises a first mounting region mounted to the first support and/or mounted to an outer surface thereof. The tolerance compensation element further comprises a second mounting region mounted to the second support and/or an outer surface thereof. The tolerance compensation element further comprises an elastic region arranged between the first mounting region and the second mounting region. The elastic region can at least partly be stretched and/or compressed, thereby allowing a movement of the first support with respect to the second support. Accordingly, the tolerance compensation element may also refer to an elastic element. The tolerance compensation element may be formed as a single part or it may comprise a plurality of parts. Specifically, the first mounting region, the second mounting region, and the elastic region can be formed as separate parts.

According to an embodiment of the invention, at least a part of the elastic region of the tolerance compensation element is curved and/or curvilinear shaped. Alternatively or additionally, at least a part of the elastic region of the tolerance compensation element is U-shaped, V-shaped and/or S-shaped. Generally, this may further increase a compressibility and/or stretchability of the elastic region and/or the tolerance compensation element.

According to an embodiment of the invention, at least a part of the elastic region of the tolerance compensation element comprises an elastic material. The elastic material can be compressible and/or stretchable, thereby providing elasticity and/or flexibility to the tolerance compensation element.

According to an embodiment of the invention, the elastic region of the tolerance compensation element comprises at least one cavity, clearance, and/or opening. By means of the at least one cavity, clearance and/or opening, a stiffness and/or rigidity of the elastic region may be reduced, thereby increasing a flexibility of the tolerance compensation element.

According to an embodiment of the invention, the first support comprises a first mounting recess, in which at least a part of the first mounting region of the tolerance compensation element is arranged. Alternatively or additionally, the second support comprises a second mounting recess, in which at least a part of the second mounting region of the tolerance compensation element is arranged. The first mounting recess may be formed and/or arranged on an outer surface of the first support. The second mounting recess may be formed and/or arranged on an outer surface of the second support. The first mounting recess and the second mounting recess may allow to keep the compensation element fixed and/or in place on the first support and/or the second support. Generally, this may allow to increase an overall robustness of the slider assembly. Also, such design and/or configuration can simplify an assembly process.

According to an embodiment of the invention, the tolerance compensation element can be fixed to at least one of the first support and the second support by a bolt connection, a clamp connection, a screw joint, a rivet joint, a weld joint and/or a bonded joint. This allows a stable connection between the tolerance compensation element and at least one of the first support and he second support.

According to an embodiment of the invention, the first support and the second support are injection molded. Generally, this may allow to precisely, efficiently and quickly manufacture the slider assembly. Therein, the tolerance compensation element can be integrated in at least one of the first and second supports during the injection molding process. However, also the tolerance compensation element can be injection molded.

According to an embodiment of the invention, the slider assembly further comprises at least one motor and/or drive for driving the slider assembly along the first rail and the second rail, particularly along and/or parallel to a longitudinal extension direction of the firs rail and/or the second rail, which may be referred to as moving direction of the slider assembly. Therein, at least one of the first support and the second support is attached and/or mechanically fixed to the motor. Arranging a motor on at least one of the first support and the second support allows for an automated movement of the slider assembly along the rails. The motor can refer to any suitable drive, such as e.g. an electromagnetic motor, a linear motor, a stepping motor, a pneumatic motor, a hydraulic motor, an electromagnetic device, and/or a combustion engine.

According to a second aspect of the invention, a use of a slider assembly, as described above and in the following, in a transportation system for transporting an object is provided. Preferably, the slider assembly can be used in a laboratory automation system for transporting a sample of a body fluid, a sample container and/or an instrument.

According to a third aspect of the invention, an automatic transportation system for transporting an object is provided. The transportation system comprises at least one slider assembly, as described above and in the following, a first rail arranged at least partly in the first guiding element of the at least one slider assembly, and a second rail arranged at least partly in the second guiding element of the at least one slider assembly. The transportation system further comprises a controller, wherein the at least one slider assembly comprises a motor for driving the slider assembly along the first rail and the second rail. Further, the controller is coupled, e.g. operationally coupled, to the motor and configured to control a movement of the at least one slider assembly along the first rail and the second rail.

It is emphasized that any feature, element and/or function, which is described above and in the following with reference to one aspect of the invention, equally applies to any other aspect of the invention, as described above and in the following. Particularly, features, elements and/or functions, as described above and in the following with reference to the slider assembly according to the first aspect, equally apply to the use of the slider according to the second aspect and/or to the transportation system according to the third aspect, and vice versa.

According to an embodiment of the invention, the motor is attached and/or mechanically fixed to the first support and configured to exert a driving force on the first support, wherein the tolerance compensation element is configured to transfer at least a part of the driving force to the second support, such that the second support is pulled by the first support (and/or by a movement of the first support) during a movement of the slider assembly in a moving direction along the first rail and the second rail. Further, the tolerance compensation element is configured to reduce a force exerted on the first guiding element and/or the second guiding element in a direction transverse to the moving direction during movement of the slider assembly. Therein, the term along the first and/or second rail may refer to along a longitudinal extension direction of the first and/or second rail.

These and other aspects of the invention will be apparent from and elucidated with reference to the embodiments described hereinafter.

### Brief description of the drawings

The subject-matter of the invention will be explained in more detail in the following with reference to exemplary embodiments which are illustrated in the attached drawings, wherein:
Fig. 1A shows schematically a perspective view of a transportation system according to an exemplary embodiment of the invention;
Fig. 1B shows schematically a side view of the transportation system of Fig. 1A;
Fig. 1C shows schematically a bottom view of the transportation system of Figs. 1A and 1B;
Fig. 2A shows schematically a perspective view of a transportation system according to an exemplary embodiment of the invention;
Fig. 2B shows schematically a perspective view of a transportation system according to an exemplary embodiment of the invention;
Figs. 3A to 3C each show schematically a perspective view of a slider assembly according to an exemplary embodiment of the invention;
Fig. 4 shows schematically a perspective view of a slider assembly according to an exemplary embodiment of the invention;
Figs. 5A to 5E each show schematically a tolerance compensation element for a slider assembly according to exemplary embodiments of the invention.

In principle, identical or like parts are provided with identical or like reference symbols in the figures.

### Detailed description of exemplary embodiments

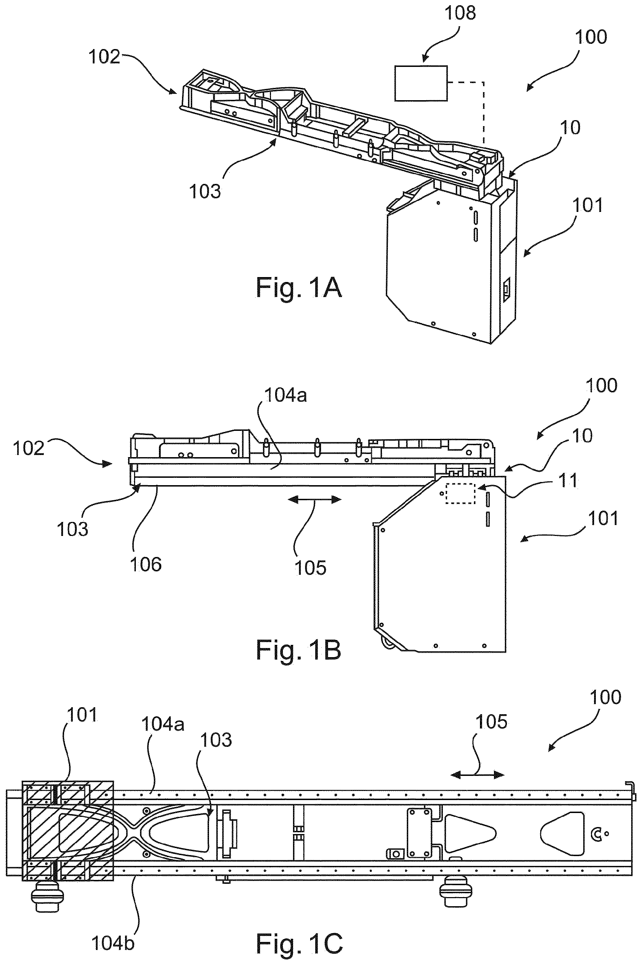

Figure 1A shows schematically a perspective view of a transportation system 100 according to an exemplary embodiment of the invention. Figure 1B shows schematically a side view of the transportation system 100 of Figure 1A, and Figure 1C shows schematically a bottom view of the transportation system 100 of Figures 1A and 1B.

The transportation system 100 comprises a body part 102 or support structure 102. The transportation system 100 further comprises a first rail 104a and a second rail 104b arranged on the body part 102. In the exemplary embodiment illustrated in Figures 1A to 1C the first rail 104a and the second rail 104b are arranged on a bottom surface 103 of the body part 102. However, the first rail 104a and the second rail 14b can also be arranged on a top surface of the body part 102.

The first rail 104a and the second rail 104b are mounted to and/or mechanically fixed to the body part 102. The first rail 104a and the second rail 104b extend substantially parallel to each other.

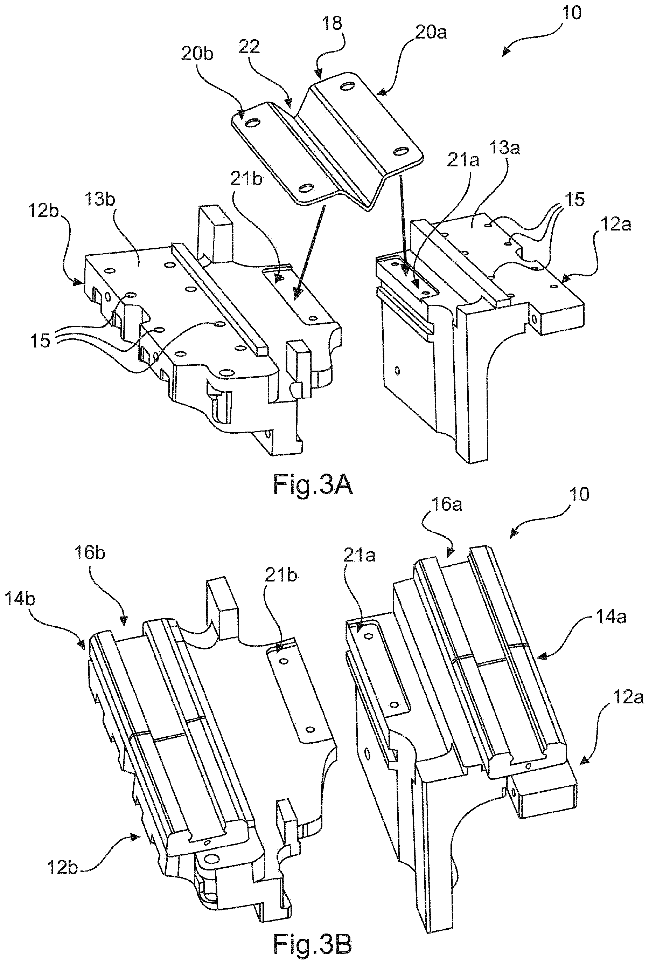

The transportation system 100 further comprises a slider assembly 10 slidably arranged on the first rail 104 and the second rail 104b. The slider assembly 10 will be described in more detail with reference to Figures 3A to 5E.

An object 101 is arranged on, mounted to and/or fixed to the slider assembly 10. In the exemplary embodiment depicted in Figures 1A to 1C, the object 101 is a laboratory instrument 101 that can be moved and/or positioned by means of the transportation system 100 in a laboratory environment. Accordingly, the transportation system 100 of Figures 1A to 1C can refer to a laboratory automation system 100. The object 101, however, can be any other kind of object that is to be positioned and/or moved in any other working environment, such as e.g. a manufacturing environment.

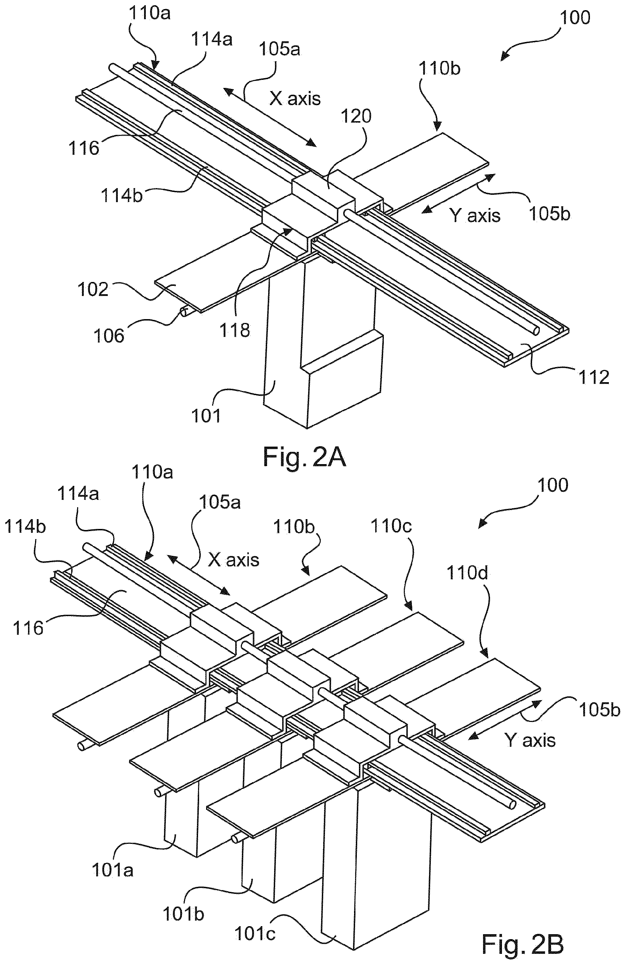

Further, the transportation system 100 is configured to move and/or position the instrument 101 along an axis 105 substantially parallel to the first and second rails 104a, 104b and/or substantially parallel to a longitudinal extension direction of the first and second rails 104a, 104b. In other words, the transportation system 100 of Figures 1A to 1C is configured to move the object 101 in a single spatial direction. The axis 105 can refer to a moving direction 105 in which the instrument 101 can be moved. It is noted, however, that the transportation system 100 can comprise additional elements and/or parts to position the instrument 101 in one or two further spatial directions, such as e.g. described with reference to Figures 2A and 2B.

In order to move the object 101 along the first and second rails 104a, 104b and/or along the axis 105, the transportation system 100 further comprises a motor 11 for driving the slider assembly 10 along the first and second rails 104a, 104b. The motor 11 is only schematically depicted in Figure 1B. The motor 11 can be part of the slider assembly 10 and/or it can be attached to the slider assembly 10, as will be described in more detail in subsequent figures. Generally, the motor 11 can refer to any suitable drive, such as e.g. an electromagnetic motor, an electromagnetic device, a linear motor, a stepping motor, a pneumatic motor, a hydraulic motor, and/or a combustion engine. However, the instrument 101 can also be manually moved and/or driven.

In the exemplary embodiment illustrated in Figures 1A to 1C the motor 11 is an electromagnetic drive 11 or electromagnetic motor 11. The transportation system 100 further comprises a slider bar 106 arranged on the body part 102 substantially parallel to the first rail 104a and the second rail 104b. The slider bar 106 is substantially tubular shaped and comprises one or more magnets that can be embedded in the slider bar 106. At least a part of the motor 11 can be arranged adjacent to the slider bar 106 and/or at least a part of the motor 11 can at least partly encompass the slider bar 106, thereby allowing the slider assembly 10 and the instrument 101 attached thereon to be moved along the axis 105 of movement.

To control the movement of the slider assembly 10 and/or the instrument 101 along the first and second rails 104a, 104b, the transportation system 100 further comprises a controller 108. The controller 108 can refer to a control unit 108, a control module 108 and/or a control circuitry 108. The controller 108 is operationally coupled to the motor 11 to control the movement of the slider assembly 10 and/or the instrument 101, e.g. based on providing one or more control signals to the motor 11.

Further, the transportation system 100 can comprise a data storage storing software instructions, which, when executed by the controller 108, instruct the transportation system 100 to move and/or position the instrument 101.

Figure 2A shows a transportation system 100 according to another exemplary embodiment of the invention. If not stated otherwise, the transportation system 100 of Figure 2A comprises the same features, elements and/or functions as the transportation system 100 described with reference to Figures 1A to 1C.

The transportation system 100 of Figure 2A comprises a first positioning element 110a and a second positioning element 110b. Therein, the first positioning element 110a is configured to move and/or position the instrument 101 and/or the second positioning element 110b along a first axis 105a. The first axis 105a can e.g. refer to an X-axis, as indicated in Figure 2A. Accordingly, the first positioning element 110a can refer to an X-axis positioning element 110a.

The second positioning element 110b is configured to position the instrument 101 along a second axis 105b, which is referred to as Y-axis in Figure 2A. Therein, axis 105a is substantially perpendicular to axis 105b, thereby allowing positioning of the instrument 101 in two spatial directions. Accordingly, the second positioning element 110b can refer to a Y-axis positioning element 110b. Further, the transportation system 100 illustrated in Figure 2A may also be referred to as X-Y gantry system 100.

The second positioning element 110b substantially corresponds to the transportation system 100 described with reference to Figures 1A to 1C. Accordingly, axis 105b of Figure 2A corresponds to axis 105 of Figures 1A to 1C.

The first positioning element 110a comprises a body part 112 with a pair of rails 114a, 114b arranged on a top surface thereof. The first positioning element 110a further comprises an X-axis slider bar 116, exemplary arranged between the rails 114a, 114b. The X-axis slider bar 116 can be substantially tubular shaped and comprise one or more magnets that can be embedded in the X-axis slider bar 116.

The first positioning element 110a further comprises an X-axis slider arrangement 118 that is movably and/or slidably coupled to the X-axis slider bar 116. Therein, the X-axis slider bar 116 is arranged in and/or passes through a portion 120 of the X-axis slider arrangement 118. Further, an electromagnetic drive or motor (not shown) can be arranged in and/or adjacent to the portion 120 in order to move the X-axis slider arrangement 118 along the rails 114a, 114b and/or along the X-axis 105a.

The body part 102 of the second positioning element 110b is attached to the X-axis slider arrangement 118, such that the second positioning element 110b can be moved and/or positioned along the X-axis 105a. Further, by means of the slider bar 106 of the second positioning element 110b, which corresponds to the slider bar 106 of Figures 1A to 1C, and by means of the motor 11 (see Figures 1A to 1C), the instrument 101 can be moved and/or positioned along the Y-axis 105b.

Figure 2B shows a transportation system 100 according to another exemplary embodiment of the invention. If not stated otherwise, the transportation system 100 of Figure 2B comprises the same features, elements and/or functions as the transportation systems 100 described with reference to Figures 1A to 2A.

The transportation system 100 depicted in Figure 2B comprises a first positioning element 110a that corresponds to the first positioning element 110a of Figure 2A and that serves for positioning along the X-axis 105 a. The transportation system 100 further comprises a second positioning element 110b, a third positioning element 110c and a fourth positioning element 110d. Each of the second to fourth positioning element 1 10b-d can correspond to the second positioning element 110b of Figure 2A, i.e. they can refer to Y-axis positioning elements. Each of the positioning elements 1 10b-d carries an instrument 101a-c, such that each of the instruments 101a-c can be positioned along the Y-axis 105b by means of one of the second to fourth positioning elements 104b-d. Further, each of the second to fourth positioning element 1 10b-d is coupled to the first positioning element 110a, as described with reference to Figure 2A. Accordingly, each of the second to fourth positioning element 1 10b-d can be moved and/or positioned by means of the first positioning element 110a along the X-axis 105a. The instruments 101a-c may be of the same or different type. By using a plurality of instruments 1 10a-c and a plurality of positioning elements 1 10b-d for positioning along the Y-axis 105b, a plurality of operations can be performed by the plurality of instruments 101a-c within the transportation system 100.

Figures 3A to 3C each show schematically a perspective view of a slider assembly 10 according to an exemplary embodiment of the invention. If not stated otherwise, the slider assembly 10 of Figures 3A to 3C comprise the same features and/or elements as the slider assemblies 10 described with reference to aforegoing figures.

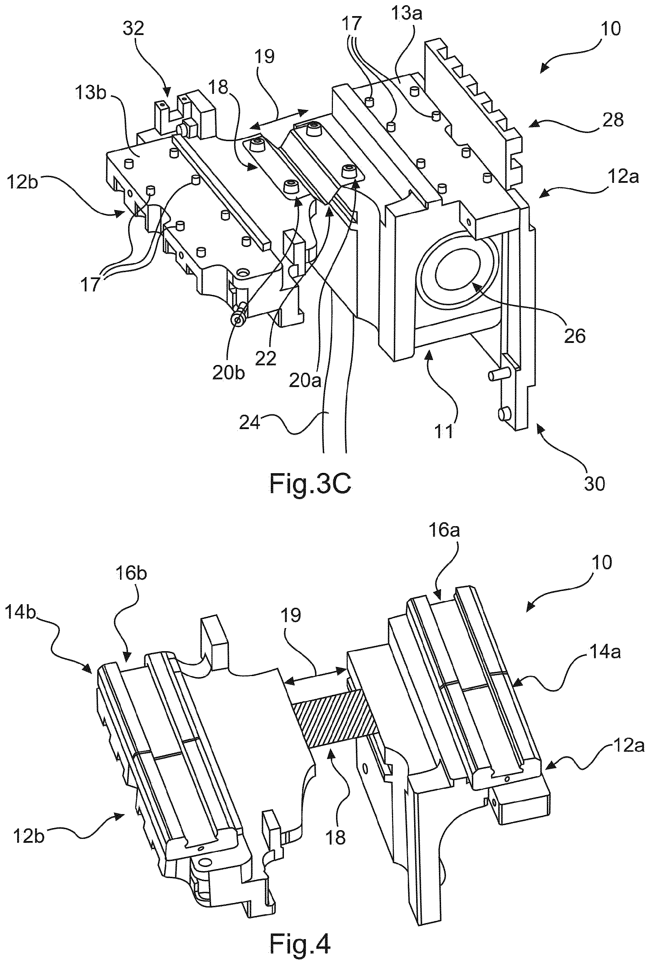

The slider assembly 10 comprises a first support 12a and a second support 12b. The slider assembly 10 further comprises a first guiding element 14a arranged on the first support 12a and a second guiding element 14b arranged on the second support 12b. For reasons of clarity, the guiding elements 14a, 14b are illustrated in Figure 3B only, whereas the slider assembly 10 is illustrated in Figures 3A and 3C without the guiding elements 14a, 14b.

In the example illustrated in Figures 3A to 3C, the first support 12a comprises a first supporting surface 13a, on which the first guiding element 14a is arranged and/or mounted to. Likewise, the second support 12b comprises a second supporting surface 13b, on which the second guiding element 14b is arranged and/or mounted to. To mount and/or fix the guiding elements 14a, 14b to the first or second support 12a, 12b, each of the first and second support 12a, 12b comprises a plurality of through-holes or openings 15. Each of the openings 15 can receive a screw 17 and/or bolt 17 (see Figure 3C), which engages with a correspondingly formed opening in the first and/or second guiding element 14a, 14b, such that the first and/or second guiding element 14a, 14b are mechanically fixed to the first and/or second support 12a, 12b. It is to be noted, however, that the first and second guiding elements 14a, 14b can be mounted and/or fixed to the first and second supports 12a, 12b, respectively, by any other suitable connection, such as e.g. a welding connection, a bond connection and/or a glue connection. Further, the first guiding element 14a and the first support 12a can be formed as a single part. Likewise, the second guiding element 14b and the second support 12b can be formed as a single part. In other words, the first and second guiding elements 14a, 14b can be integrally formed with the first and second supports 12a, 12b, respectively.

The first guiding element 14a comprises a first recess 16a configured to receive a first rail 104a, e.g. as described and shown in Figure 1C. The second guiding element 14b comprises a second recess 16b configured to receive a second rail 104b, e.g. as described and shown in Figure 1C. As shown in Figure 3B, the first and second guiding elements 14a, 14b are substantially U-shaped, such that the first guiding element 14a can at least partly encompass the first rail 104a and the second guiding element 14b can at least partly encompass the second rail 104b. This way, the slider assembly 10 can be mounted to the first and second rails 104a, 104b and can move slide, glide and/or travel along the first and second rails 104a, 104b in the moving direction 105 and/or along axis 105. It is to be noted, however, that the first and second guiding elements 14a, 14b can also comprise a guiding compartment, in which the first and second rails 104a, 104b can be arranged, respectively.

Further, in the embodiment illustrated in Figure 3B the slider assembly 10 comprises two first guiding elements 14a arranged in a row on the first support 12a, and the slider assembly 10 comprises two second guiding elements 14b arranged in a row on the second support 12b. Generally, the slider assembly 10 can comprise one or an arbitrary number of first guiding elements 14a and/or second guiding elements 14b.

Moreover, each of the first guiding element 14a and the second guiding element 14b can comprise at least one bearing for reducing a friction between the first rail 104a and the first guiding element 14a as well as for reducing a friction between the second rail 104b and the second guiding element 14b.

The slider assembly 10 further comprises a tolerance compensation element 18 connecting the first support 12a and the second support 12b, such that at least a partial region of the first support 12a is spaced apart from at least a partial region of the second support 12b. In the embodiment illustrated in Figures 3A to 3C, the first support 12a, the second support 12b, and the tolerance compensation element 18 are formed as separate parts. Further, the tolerance compensation element 18 is exemplary arranged on one end of the first and second support 12a, 12b, respectively, as shown in Figure 3C, and opposite ends of the first and second supports 12a, 12b are not connected to each other. Accordingly, the entire first support 12a and entire the second support 12b are spaced apart from each other by the tolerance compensation element 18 interconnecting the first support 12a and the second support 12b. However, at least a part of the first support 12a can alternatively be connected to at least a part of the second support 12b. Particularly, the ends of the first and second supports 12a, 12b opposite to the tolerance compensation element 18 can be connected. Also, the first and second supports 12a, 12b may be formed as a single part.

Due to the spacing between at least a part of the first support 12a and at least a part of the second support 12b, the first and second supports 12a, 12b can move relative to each other. Particularly, the first support 12a and the second support 12b can move in a direction towards each other and/or away from each other, as indicated by the arrow 19 in Figure 3C.

The first rail 104 and the second rail as shown in Figure 1C, each can at least partly be curved, e.g. due to mechanical tolerances, thermal expansion, stress and/or strain. For instance, a distance and/or clearance between the first rail 104a and the second rail 104b can be larger near the ends of the rails 104a, 104b compared to a center region of the rails 104a, 104b. The difference in distance between the first rail 104a and the second rail 104b near the ends of the rails 104a, 104b with respect to the distance in the center regions of the rails 104a, 104b can range from about 0.1 mm to 1 mm, e.g. from about 0.3 to 1 mm, and even more. In order to compensate for any curvature of the first rail 104a and/or the second rail 104b, the first support 12a and the second support 12b are at least partly spaced apart by the tolerance compensation element 18 to allow a movement relative to each other. Accordingly, the first support 12a and the second support 12b can be spaced apart from each other by at least 0.1 mm, preferably by at least 0.3 mm in order to allow a movement towards each other, which is in the range of tolerance of the distance between the rails 104a, 104b.

Due to the movability of the first and second supports 12a, 12b a force exerted on the slider assembly 10 in a direction transverse to the moving direction 105 of the slider assembly 10, particularly while moving the slider assembly 10 along the rails 104a, 104b, can effectively and efficiently be reduced and/or minimized. This, in turn, ensures that the slider assembly 10 can easily be moved along the rails 104a, 104b. Also, mechanical stress and/or strain can be reduced in the slider assembly 10. Thus, a lifetime of the slider assembly 10 and/or of the transportation system 100 comprising the slider assembly 10 can be increased. Further, downtimes of the transportation system 100 can be reduced and/or minimized.

For coupling the first support 12a to the second support 12b via the tolerance compensation element 18, the tolerance compensation element 18 comprises a first mounting region 20a attached to the first support 12a and a second mounting region 20b attached to the second support 12b. Therein, the first support 12a comprises a first mounting recess 21a, in which the first mounting region 20a is at least partly arranged, and the second support 12b comprises a second mounting recess 21b, in which the second mounting region 20b is at least partly arranged.

In the example depicted in figures 3A to 3C, the first mounting region 20a is mechanically fixed to the first support 12a by a screw connection with two screws. Likewise, the second mounting region 20b is mechanically fixed to the second support 12b by a screw connection with two screws. However, any other suitable connection for connecting the tolerance compensation element 18 to the first and second supports 12a, 12b is conceivable, such as e.g. a bolt connection, a clamp connection, a rivet joint, a weld joint and/or a bonded joint.

The tolerance compensation element 18 further comprises an elastic region 22 arranged between the first mounting region 20a and the second mounting region 20b. The tolerance compensation element 18 is attached to the first and second supports 12a, 12b, such that at least a part of the elastic region 22 is arranged between the first support 12a and the second support 12b, thereby spacing apart the first support 12a, and the second support 12b. At least a part of the elastic region 22 can be stretched and/or compressed, such that first support 12a and the second support 12b can move with respect to each other.

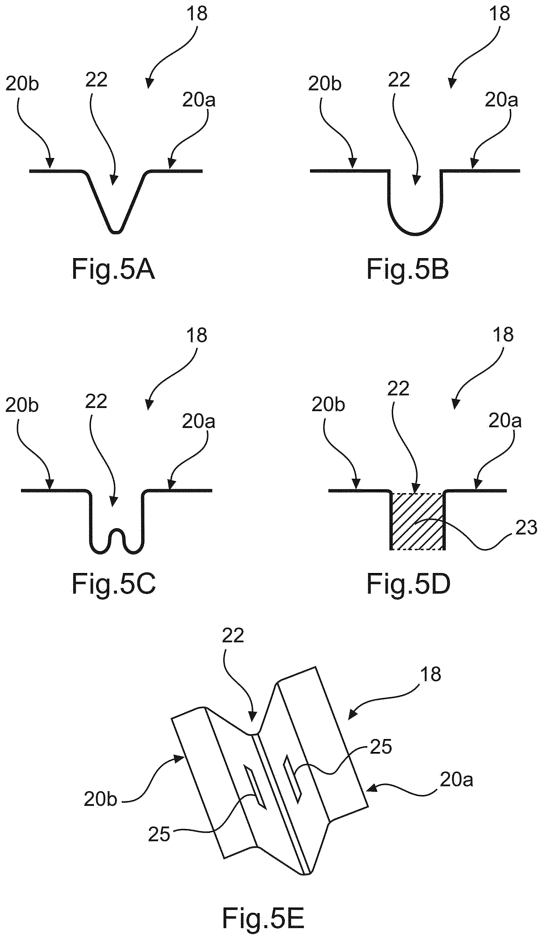

In the exemplary embodiment illustrated in Figures 3A to 3C, at least a part of the elastic region 22 of the tolerance compensation element 18 is curved and/or curvilinear. This may increase a stretchability and/or compressibility of the elastic region 22. Specifically, at least a part of the elastic region 22 is V-shaped. However, the elastic region 22 can have any other suitable shape, as will be described in detail with reference to Figures 5A to 5E.

Further, in the embodiment shown in Figures 3A to 3C, the tolerance compensation element 18 is formed from a metal sheet comprising e.g. steel, spring steel and/or any other metal. The metal sheet may have a thickness of at least 0.1 mm, preferably at least 0.3 mm, and more preferably at least 0.5 mm. This can provide enough rigidity to the tolerance compensation element 18, e.g. to transfer at least a part of a driving force, while also providing enough flexibility. However, the tolerance compensation element 18 can comprise any other suitable material, such as e.g. fiber-reinforced composite material, fiber-reinforced plastic material, elastic material, elastomer, and polymer-based material. Moreover, the tolerance compensation element 18 can be formed as single or multiple parts.

It is to be noted that the first support 12a and the second support 12b can be injection molded. Also the tolerance compensation element 18 can be injection molded and/or it can be integrated into at least one of the first support 12a and the second support 12b during injection molding.

As illustrated in Figure 3C, the slider assembly 10 further comprises a motor 11 or drive 11 for driving the slider assembly 10 along the rails 104a, 104b and e.g. for positioning the instrument 101, as described in aforegoing figures. The motor 11 depicted in Figure 3C is an electromagnetic motor 11 or electromagnetic device 11, that is coupled to a power source, e.g. via a cable connection 24 and/or a cable 24. Further, control signals may be provided to the motor 11 via the cable 24 from the controller 108 (see e.g. Figure 1A). The slider assembly 10 further comprises an opening 26 extending parallel to the moving direction 105, through which opening 26 a slider bar 106 (see e.g. Figure 1B) can be passed through. In other words, the opening 26 can at least partly encompass the slider bar 106. The slider bar 106 can comprise one or more magnets, such that the slider assembly 10 can be moved via electromagnetic force along the slider bar 106 and/or along the rails 104a, 104b.

To purge heat from the motor 11, the slider assembly 10 further comprises a heat sink 28 and/or cooling device 28 attached to an outer surface of the motor 11.

The slider assembly 10 further comprises an attachment element 30, to which the instrument 101 or any other object 101 can be mounted and/or fixed.

The slider assembly 10 further comprises a sensor 32 arranged on the second support 12b and configured to detect a position of the slider assembly 10 on the rails 104a, 104b. The senor 32 may e.g. be an optical sensor or any other type of sensor, such as e.g. a distance sensor, an ultra-sound sensor, a radar sensor, a laser sensor, or the like.

It is to be noted that the slider assembly 10 can comprise at least one further support and at least one further tolerance compensation element, by which the at least one further support is attached to at least one of the first support 12a and the second support 12b. This way, a slider assembly 10 for traveling along at least three rails can be provided.

Figure 4 shows schematically a perspective view of a slider assembly 10 according to an exemplary embodiment of the invention. If not stated otherwise, the slider assembly 10 of Figure 4 comprises the same features and/or elements as the slider assembly 10 described with reference to aforegoing figures.

In contrast to the slider assembly 10 shown in Figures 3A to 3C, the tolerance compensation element 18 of the slider assembly 10 of Figure 4 is arranged between the first support 12a and the second support 12b. In contrast to the tolerance compensation element 18 of Figures 3A to 3C, the tolerance compensation element 18 of Figure 4 does not comprise an elastic region 22. However, also the tolerance compensation element 18 of Figure 4 allows a movement of the first support 12a and the second support 12b towards each other and away from each other as indicated by the arrow 19. For instance, the tolerance compensation element 18 can be a pneumatic element 18, a pneumatic spring, a gas spring, a piston and cylinder combination and/or any other device configured for providing a rigid connection of the first support 12a and the second support 12b, while also allowing a movement of those parts towards each other and/or away from each other.

Figures 5A to 5E each show schematically a tolerance compensation element 18 for a slider assembly 10 according to exemplary embodiments of the invention. If not stated otherwise, the tolerance compensation elements 18 of Figures 5A to 5E comprise the same features and/or elements as tolerance compensation elements 18 described with reference to aforegoing figures.

In Figure 5A, a cross-section of the tolerance compensation element 18, as described with reference to Figures 3A to 3C, is schematically shown. Evidently, at least a part of the elastic region 22 is V-shaped, thereby providing stretchability and/or compressibility to the tolerance compensation element 18.

In Figure 5B, a cross-section of a tolerance compensation element 18 according to a further embodiment is shown. At least a part of the elastic region 22 is U-shaped, thereby providing stretchability and/or compressibility to the tolerance compensation element 18.

In Figure 5C, a cross-section of a tolerance compensation element 18 according to a further embodiment is shown. At least a part of the elastic region 22 is S-shaped, thereby providing stretchability and/or compressibility to the tolerance compensation element 18.

In Figure 5D, a cross-section of a tolerance compensation element 18 according to a further embodiment is shown. In the embodiment shown in Figure 5D, the elastic region 22 comprises an elastic material 23, such as e.g. an elastomer. The first mounting region 20a and the second mounting region 20b can comprise a different material, such as e.g. metal, and they can be connected to the elastic region 22, e.g. via a glue connection or any other suitable connection. The first and second mounting regions 20a, 20b e.g. can have the form of a bracket, as shown in Figure 5D.

In Figure 5E, a perspective view of a tolerance compensation element 18 according to a further embodiment is shown. Therein, the elastic region 22 comprises two cavities 25, which serve to decrease a rigidity of the elastic region 22 and/or to increase a flexibility of the elastic region 22. The tolerance compensation element 18 can comprise an arbitrary number of cavities 25. Also, the cavities 25 can be arbitrarily shaped, such as e.g. trench-like, round, elliptic, or polygonal.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A slider assembly (10) for a transportation system (100) for transporting an object (101), the slider assembly (10) comprising:
a first support (12a) and a second support (12b);
a first guiding element (14a) arranged on the first support (12a) and a second guiding element (14b) arranged on the second support (12b); and
a tolerance compensation element (18);
wherein the first guiding element (14a) is configured to receive a first rail (104a) and the second guiding element (14b) is configured to receive a second rail (104b), such that the slider assembly (10) is slidably arrangeable on the first rail (104a) and the second rail (104b); and
wherein the tolerance compensation element (18) connects the first support (12a) and the second support (12b) and/or connects the first guiding element (14a) and the second guiding element (14b), such that at least a part of the first support (12a) and at least a part of the second support (12b) are spaced apart from each other, thereby allowing a relative movement of the first support (12a) and the second support (12b) with respect to each other.

2. The slider assembly (10) according to claim 1,
wherein the first support (12a) and the second support (12b) are formed as separate parts; and/or
wherein the first support (12a), the second support (12b), and the tolerance compensation element (18) are formed as separate parts.

3. The slider assembly (10) according to any of claims 1 and 2,
wherein said at least part of the first support (12a) and said at least part of the second support (12b) are spaced apart from each other by at least 0.1 mm, preferably by at least 0.3 mm, thereby allowing a relative movement of the first support (12a) and the second support (12b) in a direction towards each other and/or in a direction away from each other; and/or
wherein the tolerance compensation element (18) is configured to allow a relative movement of the first support (12a) and the second support (12b) in a direction towards each other and/or in a direction away from each other by at least 0.1 mm, preferably by at least 0.3 mm.

4. The slider assembly (10) according to any of the preceding claims,
wherein the first guiding element (14a) comprises a first recess (16a) configured to at least partly encompass the first rail (104a); and/or
wherein the second guiding element (14b) comprises a second recess (16b) configured to at least partly encompass the second rail (104b).

5. The slider assembly (10) according to any of the preceding claims,
wherein the first guiding element (14a) is integrally formed with the first support (12a); and/or
wherein the second guiding element (14b) is integrally formed with the second support (12b).

6. The slider assembly (10) according to any of the preceding claims, further comprising:
at least one further support and at least one further tolerance compensation element connecting the at least one further support to at least one of the first support (12a) and the second support (12b).

7. The slider assembly (10) according to any of the preceding claims,
wherein the tolerance compensation element (18) comprises at least one material selected from the group consisting of metal, fiber-reinforced composite material, fiber-reinforced plastic material, elastic material, elastomer, and polymer-based material; and/or
wherein the tolerance compensation element (18) is at least partly formed from a metal sheet.

8. The slider assembly (10) according to any of the preceding claims,
wherein the tolerance compensation element (18) comprises a first mounting region (20a) mounted to the first support (12a), a second mounting region (20b) mounted to the second support (12b), and an elastic region (22) arranged between the first mounting region (20a) and the second mounting region (20b).

9. The slider assembly (10) according to claim 8,
wherein at least a part of the elastic region (22) of the tolerance compensation element (18) is curved and/or curvilinear shaped.

10. The slider assembly (10) according to any of claims 8 and 9,
wherein at least a part of the elastic region (22) of the tolerance compensation element (18) is U-shaped, V-shaped and/or S-shaped.

11. The slider assembly (10) according to any of claims 8 to 10,
wherein at least a part of the elastic region (22) of the tolerance compensation element (18) comprises an elastic material (23);and/or
wherein the elastic region (22) of the tolerance compensation element (16) comprises at least one cavity (25).

12. The slider assembly (10) according to any of the preceding claims, further comprising:
at least one motor (11) for driving the slider assembly (10) along the first rail (104a) and the second rail (104b);
wherein at least one of the first support (12a) and the second support (12b) is attached and/or mechanically fixed to the motor (11).

13. Use of a slider assembly (10) according to any of the preceding claims in a transportation system (100), preferably in a laboratory automation system for transporting a sample of a body fluid, a sample container and/or an instrument (101).

14. An automatic transportation system (100) for transporting an object (101), the transportation system (100) comprising:
at least one slider assembly (10) according to any of claims 1 to 12;
a first rail (104a) arranged at least partly in the first guiding element (14a) of the at least one slider assembly (10); and
a second rail (104b) arranged at least partly in the second guiding element (14b) of the at least one slider assembly (10); and
a controller (108),
wherein the at least one slider assembly (10) comprises a motor (1) for driving the slider assembly (10) along the first rail (104a) and the second rail (104b); and
wherein the controller (108) is coupled to the motor (11) and configured to control a movement of the at least one slider assembly (10) along the first rail (104a) and the second rail (104b).

15. The automatic transportation system (100) according to claim 14,
wherein the motor (11) is attached and/or mechanically fixed to the first support (12a) and configured to exert a driving force on the first support (12a);
wherein the tolerance compensation element (18) is configured to transfer at least a part of the driving force to the second support (12b), such that the second support (12b) is pulled by the first support (12a) during a movement of the slider assembly (10) in a moving direction (105) along the first rail (104a) and the second rail (104b); and
wherein the tolerance compensation element (18) is configured to reduce a force exerted on the first guiding element (14a) and/or the second guiding element (14b) in a direction transverse to the moving direction (105) during movement of the slider assembly (10).
